# FASCICULE DE BREVET EUROPEEN

(11) **EP 0 277 848 B1**
(45) Date de publication et mention de la délivrance du brevet: **07.04.1993**
(21) Numéro de dépôt: 88400034.0
(22) Date de dépôt: 07.01.1988
(51) Int. Cl.: H01H 33/02, H02B 1/18, H01H 33/18

(54) **Disjoncteur polyphasé à autoexpansion équipé d'une chambre de coupure blindée par pole**
Mehrphasenleistungsschalter mit Selbstausdehnung, ausgerüstet mit einer gekapselten Löschkammer je Phase
Multiphase circuit breaker with self-expansion having per phase a gas-insulated arc extinguishing chamber

(30) Priorité: 19.01.1987 FR 8700624
(43) Date de publication de la demande: 10.08.1988
(73) Titulaire: MERLIN GERIN, F-38050 Grenoble Cédex (FR)
(72) Inventeur: Marsala, Lucien, F-38050 Grenoble Cedex (FR); Marzocca, Joseph, F-38050 Grenoble Cedex (FR); Perrissin, Gérard, F-38050 Grenoble Cedex (FR); Robert, Jean-Paul, F-38050 Grenoble Cedex (FR)
(74) Mandataire: Hecké, Gérard

(56) Documents cités:
- EP-A- 0 068 951
- EP-A- 0 095 406
- FR-A- 1 218 848
- FR-A- 1 220 038
- FR-A- 2 354 624
- GB-A- 580 634

## Description

L'invention est relative à un disjoncteur polyphasé à autoexpansion, ayant une pluralité de chambres de coupure disposées parallèlement les unes à côté des autres dans une cellule à cuve étanche remplie d'un gaz à rigidité diélectrique élevée, notamment de l'hexafluorure de soufre, la chambre de chaque pôle comprenant :
- une enveloppe fermée dans laquelle sʹeffectue une montée en pression du gaz sous l'action de l'arc,
- une paire de contacts séparables et alignés sʹétendant dans la direction de l'axe longitudinal de l'enveloppe, l'un au moins desdits contacts étant creux pour assurer une communication entre l'enveloppe de chaque pôle, et le volume d'expansion de la cuve.

L'arc électrique développé dans l'un des pôles d'un disjoncteur à autoexpansion est soumis à l'induction magnétique engendrée par le ou les pôles voisins, ce qui donne naissance à une force tendant à déplacer l'arc. Cet effet parasite des pôles adjacents est d'autant plus important que les pôles sont rapprochés les uns des autres. Un écartement important entre pôles permet une diminution notable de cet effet parasite, mais cela va au détriment de l'encombrement de la cellule.

L'influence du champ magnétique parasite dû aux pôles voisins est particulièrement néfaste à la coupure de l'arc d'un disjoncteur à autoexpansion. Le déplacement latéral de l'arc conduit à un décentrage des racines d'arc par rapport à l'axe longitudinal de l'enveloppe. Un tel décentrage affecte l'échappement du gaz vers le volume d'expansion de la cellule, et peut entraver le processus de coupure.

Le document EP-A-0 068 951 décrit un interrupteur ayant une chambre de coupure à paroi isolante, renfermant un dispositif à autosoufflage par pistonnage du gaz au moyen d'un ensemble piston-cylindre actionné par le mécanisme de commande. La montée en pression s'opère par compression du gaz dans un volume pistonnable, suivi d'un écoulement de gaz à travers une tuyère entourant la zone d'arc. Le pouvoir de coupure d'un tel appareil peut être augmenté, soit par adjonction d'un coupe-circuit à fusible, soit en renforçant la puissance du dispositif de pistonnage. La présence d'un coupe circuit à fusible en série avec l'interrupteur pose des problèmes de maintenance et de contrôle, et complique l'architecture de la cellule. Le renforcement du dispositif de pistonnage nécessite une grande énergie d'actionnement, et un surdimensionnement du mécanisme de commande.

Le document EP-A-0 095 406 décrit un pôle de disjoncteur à autoexpansion ayant un carter de séparation entre la chambre de coupure et l'enveloppe. Le carter ne possède aucune fonction de blindage.

Le document GB-A-580.634 décrit un disjoncteur à diélectrique liquide, ayant des contacts entourés par un blindage magnétique destiné à canaliser le flux magnétique pour compenser les forces électromagnétiques agissant sur les contacts.

Le document FR-A-1 220.038 se rapporte a un blindage ferromagnétique pour diminuer les contraintes mécaniques se produisant lors de l'apparition d'un courant de court-circuit.

Le document FR-A-1 218.848 concerne un blindage pour réduire les forces de répulsion suite à un court-circuit.

L'objet de l'invention consiste à réaliser un disjoncteur polyphasé à autoexpansion ayant une cellule à encombrement réduit, et présentant une insensibilité à l'effet de proximité des différents pôles à l'intérieur de la cellule.

Le disjoncteur selon l'invention est caractérisé en ce que :
- l'enveloppe de chaque chambre de coupure comporte une paroi métallique de blindage destinée à s'opposer à l'influence des champs magnétiques parasites des pôles adjacents susceptibles de provoquer un déplacement radial de l'arc selon une direction perpendiculaire à l'axe longitudinal de l'enveloppe, ladite paroi ayant une surface latérale de révolution agencée au voisinage de la zone d'arc pour assurer un centrage de l'arc favorisant l'écoulement du gaz vers le volume d'expansion de la cuve à travers ledit contact creux,
- une électrode annulaire constituant une piste de rotation de l'arc en liaison électrique avec le contact fixe, et entourée coaxialement par la paroi de blindage,
- et des moyens de soufflage magnétique en rotation de l'arc sur ladite électrode.

Le blindage est formé par la paroi métallique de chaque enveloppe. La présence d'un tel blindage entre pôles permet de conserver l'effet de centrage de l'arc dans chaque chambre de coupure, malgré l'existence des champs magnétiques parasites.

L'effet d'autoexpansion du gaz est complété par une rotation de l'arc sous l'action d'un champ magnétique engendré par une bobine ou un aimant permanent logé dans chaque chambre de coupure.

Selon un premier mode de réalisation de l'invention, la paroi de blindage est en matériau métallique bon conducteur de l'électricité, agencée pour être le siège de courants induits par l'action des courants circulant dans les pôles adjacents, lesdits courants induits créant un champ magnétique de compensation qui s'oppose dans la zone d'arc au champ magnétique parasite dû à l'influence des pôles voisins. La paroi de blindage peut être à base d'aluminium ayant au moins une épaisseur de quatre millimètres. La faible résistivité électrique d'un tel matériau, et l'épaisseur suffisamment grande de la paroi permettent d'obtenir une circulation importante de courants induits dans la paroi de blindage, de manière à annuler l'induction parasite.

Selon un deuxième mode de réalisation de l'invention, la paroi de blindage est en matériau ferromagnétique susceptible de canaliser les lignes de forces des champs magnétiques perturbateurs engendrés par les pôles voisins. La paroi de blindage comporte au moins un entrefer destiné à augmenter la réluctance de manière à éviter la saturation de la paroi par l'action du champ propre et des champs voisins.

Selon un développement de l'invention, la paroi de blindage de chaque enveloppe est mise à la terre de manière à constituer un anneau de garde pour chaque pôle à l'intérieur de la cuve. En plus de sa fonction de blindage, l'enveloppe de chaque chambre de coupure évite tout amorçage le long de la ligne de fuite entre les bornes du pôle.

Selon un autre développement de l'invention, les extrémités opposées de la paroi de blindage conductrice sont shuntées par un capteur de mesure du courant nominal circulant dans le pôle, ledit capteur pouvant être un transformateur de courant ou un relais d'intensité.

Les parois de blindages des différents pôles peuvent être interconnectées à l'intérieur de la cellule par des liaisons électriques.

D'autres avantages et caractéristiques ressortiront plus clairement de la description qui va suivre d'un mode de réalisation de l'invention donné à titre d'exemple et représenté aux dessins annexés dans lesquels :
- la figure 1 est une vue en coupe d'un pôle de disjoncteur triphasé à autoexpansion et à arc tournant selon l'invention;
- la figure 2 montre une vue schématique en coupe transversale d'une paroi de blindage conductrice d'un pôle soumis à l'influence d'un champ magnétique perturbateur d'un pôle voisin;
- la figure 3 représente l'alignement des trois pôles identiques à l'intérieur d'une cellule étanche du disjoncteur, la forme de chaque chambre de coupure étant différente de celle de la figure 1;
- la figure 4 montre une vue schématique d'un pôle, avec mise à la terre de l'enveloppe de blindage jouant le rôle d'anneau de garde;
- la figure 5 représente une vue schématique d'un pôle, associé à un capteur de mesure de courant;
- la figure 6 est une variante de réalisation de la figure 5 pour les trois pôles d'un disjoncteur triphasé;
- la figure 7 est une vue en coupe selon la ligne VII-VII de la fig. 8 d'une variante de réalisation;
- la figure 8 est une vue en coupe selon la ligne VIII-VIII de la fig. 7.

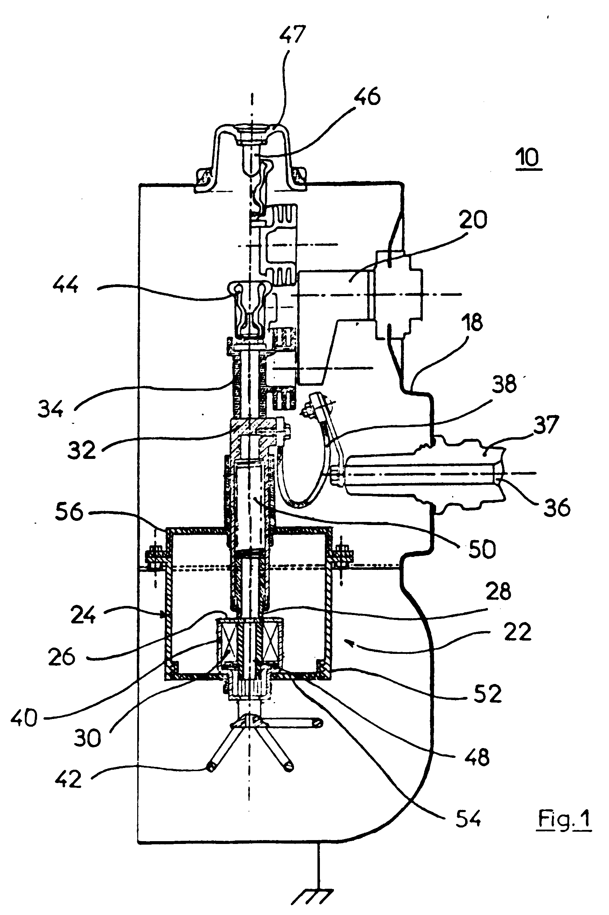

En référence aux figures 1 à 3, un disjoncteur triphasé à autoexpansion est composé de trois pôles identiques s'étendant en alignement dans une cuve étanche remplie d'un gaz isolant électronégatif à rigidité diélectrique élevée, notamment de l'hexafluorure de soufre. L'ensemble constitue une cellule d'un poste électrique à moyenne tension et à isolement gazeux intégral, décrit en détail dans le brevet français N^{o} 2.507.835. La cuve métallique scellée est reliée à la terre, et le disjoncteur 10 est commandé par un mécanisme de manoeuvre (non représenté) à trois positions accouplé à une manivelle 20 de transmission destinée à déplacer en translation l'équipage mobile des trois pôles 12 à 16 entre une première position F abaissée de fermeture, une deuxième position O intermédiaire d'ouverture, et une troisième position T relevée de mise à la terre. Les trois pôles sont disposés parallèlement les uns derrière les autres, de manière à former une rangée verticale à l'intérieur de la cuve 18.

Chaque pôle 12 à 16 comporte une chambre de coupure 22 confinée par une enveloppe 24 fermée dans laquelle s'effectue une montée en pression du gaz sous l'action de l'arc. A l'intérieur de l'enveloppe 24 se trouvent une paire de contacts 26, 28, séparables, et un aimant permanent 30 de mise en rotation de l'arc sur une piste annulaire constitué par une extension radiale du contact fixe 26. Le contact mobile 28 est actionné à coulissement par une broche 32 conductrice reliée mécaniquement à la manivelle 20 par un palonnier 34 isolant, et électriquement par un conducteur souple 38 à une traversée 37 ayant une borne de raccordement 36. Le contact fixe 26 est connecté par une douille 40 d'amenée de courant à un jeude barres 42 disposé à l'extérieur de l'enveloppe 24 dans le fond de la cuve 18. A l'opposé du contact mobile 28, la broche 32 conductrice est équipé d'une pince 44 d'embrochage susceptible de coopérer dans la troisième position T avec un plot 46 de mise à la terre fixé dans un isolateur 47 à la partie supérieure de la cuve 18.

Des voies 48, 50, d'échappement sont agencées axialement à travers les contacts 26, 28, l'aimant 30 et la broche 32 pour assurer une communication entre l'enveloppe 24 de chaque pôle 12 à 16, et le volume d'expansion de la cuve 18.

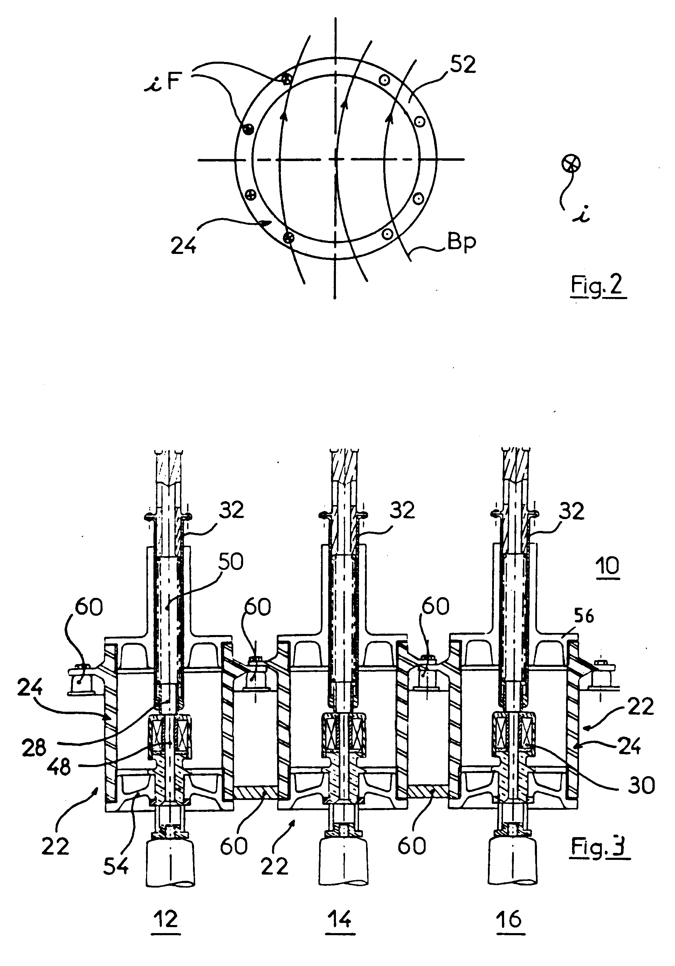

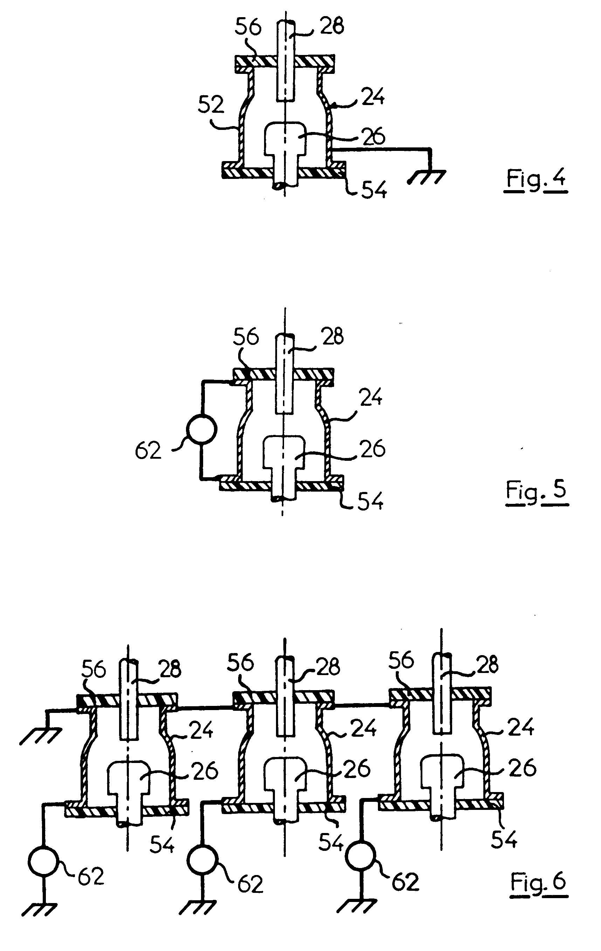

L'enveloppe 24 fermée de chaque chambre de coupure 22 comporte une paroi 52 métallique de blindage ayant une surface latérale de révolution réunie à deux supports isolants 54, 56, opposés. La paroi 52 métallique de blindage est en matériau conducteur présentant une résistivité électrique faible. L'épaisseur de la paroi 52 est supérieure à quatre millimètres lorsque le matériau conducteur est à base d'aluminium. Dans le cas de cuivre, l'épaisseur de la paroi 52 doit être supérieure à un millimètre. Un champ magnétique parasite Bp dû à l'influence du courant i parcourant le pôle voisin (figure 3) provoque une circulation de courants de Foucault iF dans la paroi 52 métallique en aluminium, de manière à créer un champ magnétique de compensation qui s'oppose dans la zone d'arcau champ magnétique Bp perturbateur. Il en résulte que les racines d'arc restent parfaitement centrées par rapport à l'axe longitudinal de l'enveloppe 24. L'arc est entraîné en rotation sur la piste de contact fixe 26 par l'action du champ magnétique inducteur de l'aimant permanent 30. L'effet de centrage d'arc procuré par la présence de la paroi 52 de blindage favorise l'écoulement du gaz vers le volume d'expansion dela cuve 18 à travers les contacts 26, 28, creux. Sur la figure 1, la paroi 52 présente une surface latérale gauche, notamment sphérique ou ellipsoïdale autour de la zone d'arc de manière à contribuer au centrage de l'arc par réflexion acoustique, et à créer un profilde tenue diélectrique homogène. Sur la figure 2, la surface latérale de la paroi 52 est cylindrique et les enveloppes 24 des trois pôles sont interconnectées à leurs extrémités opposées par des liaisons électriques 60 assurant une circulation des courants de Foucault dans des boucles contribuant à la réduction des influences des inductions parasites.
Selon une variante, la paroi 52 de blindage est réalisée en matériau ferromagnétique, notamment en acier, de manière à canaliser les lignes d'induction des champs magnétiques perturbateurs, et à empêcher tout déplacement radial de l'arc tournant. Les racines d'arc de ce dernier restent ancrées à l'intérieur des contacts 26, 28, creux pour favoriser l'autoexpansion du gaz.

Sur la figure 4, la paroi 52 de blindage en aluminium est mise intégralement à la terre pour constituer un anneau de garde de chaque pôle à l'intérieur de la cuve 18.

En référence à la figure 5, le blindage conducteur de l'enveloppe 24 peut être utilisé pour alimenter un capteur 62 de mesure de courant nominal circulant dans les conducteurs de phase. Le capteur 62 est relié aux extrémités opposées de la paroi 52 en aluminium par un circuit de shuntage. Le capteur 62 peut être constitué par un relais destiné à détecter un dépassement d'un seuil du courant d'un pôle, en mesurant la tension entre les deux extrémités de la paroi 52. Le capteur 62 peut également être formé par un transformateur d'intensité.

Selon la figure 6, les extrémités supérieures des parois 52 de blindage des trois pôles juxtaposés sont interconnectés entre elles et se trouvent au potentiel de la terre. Chaque extrémité inférieure de la paroi 52 est reliée à la terre à travers un capteur de courant.

Il est clair que l'aimant permanent 30 peut être remplacé par une bobine électromagnétique, et que les trois pôles du disjoncteur triphasé s'étendent à l'intérieur de la cuve 18 selon les arêtes parallèles d'un prisme droit.

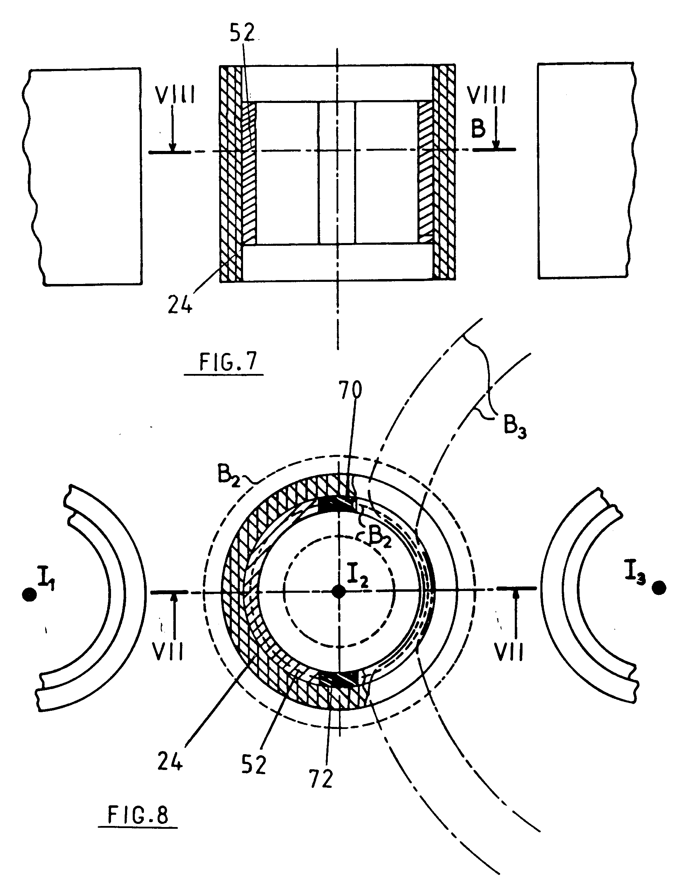

Sur les figures 7 et 8, l'enveloppe 24 cylindrique est réalisée en matériau plastique isolant, notamment du polycarbonate, comportant à l'intérieur au droit des contacts, une paroi 52 coaxiale de blindage ferromagnétique, notamment en acier, équipée de deux entrefers 70, 72 diamétralement opposés. Les entrefers 70, 72 sont réalisés en matériau a magnétique, tel du cuivre, et sont disposés perpendiculairement au plan d'alignement des trois pôles du disjoncteur. La réluctance magnétique de la paroi 52 de blindage de chaque pôle est augmentée par la présence des entrefers 70, 72 de manière à éviter la saturation de la paroi 52 due à l'action du champ propre, par exemple B2, et des champs voisins parasites B3 et B1 canalisés par la paroi 52. Le champ propre B2 du pôle intermédiaire est induit par le courant I2. Le champ voisin B3 du pôle de droite est induit par le courant I3. Le champ voisin B1 du pôle de gauche est induit par le courant I1.

## Revendications

1. Disjoncteur polyphasé à autoexpansion, ayant une pluralitè de chambres de coupure (22) disposées parallèlement les unes à côté des autres dans une cellule à cuve (18) étanche remplie d'un gaz à rigidité diélectrique élevée, notamment de l'hexafluorure de soufre, la chambre (22) de chaque pôle comprenant :
- une enveloppe (24) fermée dans la quelle s'effectue une montée en pression du gaz sous l'action de l'arc,
- une paire de contacts (26, 28), séparables et alignés sʹétendant dans la direction de l'axe longitudinal de l'enveloppe (24), l'un au moins desdits contacts étant creux pour assurer une communication entre l'enveloppe (24) de chaque pôle, et le volume d'expansion de la cuve (18), caractérisé en ce que
- l'enveloppe (24) de chaque chambre de coupure (22) comporte une paroi (52) métallique de blindage destinée à s'opposer à l'influence des champs magnétiques parasites des pôles adjacents susceptibles de provoquer un déplacement radial de l'arc selon une direction perpendiculaire à l'axe longitudinal de l'enveloppe (24), ladite paroi (52) ayant une surface latérale de révolution agencée au voisinage de la zone d'arc pour assurer un centrage de l'arc favorisant l'écoulement du gaz vers le volume d'expansion de la cuve (18) à travers ledit contact (26,28) creux,
- une électrode annulaire constituant une piste de rotation de l'arc en liaison électrique avec le contact fixe (26), et entourée coaxialement par la paroi (52) de blindage,
- et des moyens de soufflage magnétique en rotation de l'arc sur ladite électrode.

2. Disjoncteur selon la revendication 1, caractérisé en ce que la paroi (52) de blindage est en matériau métallique bon conducteur de l'électricité, agencée pour être le siège de courants induits par l'action des courants circulant dans les pôles adjacents, lesdits courants induits créant un champ magnétique de compensation qui s'oppose dans la zone d'arc au champ magnétique parasite dû a l'influence des pôles voisins.

3. Disjoncteur selon la revendication 2, caractérisé en ce que la paroi (52) de blindage est soit en aluminium avec une épaisseur supérieure à quatre millimètres, soit en cuivre avec une épaisseur supérieure à un millimètre.

4. Disjoncteur selon la revendication 1, caractérisé en ce que la paroi (52) de blindage est en matériau ferromagnétique susceptible de canaliser les lignes de forces des champs magnétiques perturbateurs engendrés par les pôles voisins.

5. Disjoncteur selon la revendication 4, caractérisé en ce que la paroi (52) de blindage comporte une paire d'entrefers (70, 72) diamétralement opposés par rapport au plan d'alignement des pôles, et que ladite paroi est disposée à l'intérieur de l'enveloppe (24) en matériau isolant.

6. Disjoncteur selon la revendication 1, 2 ou 3, chaque pôle comprenant une paire de bornes de raccordement en liaison électrique avec les contacts séparables, caractérisé en ce que la paroi (52) de blindage de chaque enveloppe (24) est mise à la terre, de manière à constituer un anneau de garde pour chaque pôle à l'intérieur de la cuve (18).

7. Disjoncteur selon la revendication 2 ou 3, caractérisé en ce que les extrémités opposées de la paroi (52) de blindage conductrice sont shuntées par un capteur (62) de mesure du courant nominal circulant dans le pôle, ledit capteur pouvant être un transformateur de courant ou un relais d'intensité.

8. Disjoncteur selon l'une des revendications 1 à 7, caractérisé en ce que les parois (52) de blindage des différents pôles (12 à 16) sont interconnectées à l'intérieur de la cellule par des liaisons électriques 60.

## Claims

1. A multiphase gas-expansion circuit breaker, having a plurality of arc extinguishing chambers (22) arranged parallel to one another side by side in a cubicle with a sealed enclosure (18) filled with a high dielectric strength gas, notably sulphur hexafluoride, the chamber (22) of each pole comprising :
- a closed housing (24) in which a gas pressure increase takes place due to the action of the arc,
- a pair of separable aligned contacts (26, 28) extending in the direction of the longitudinal axis of the housing (24), one at least of said contacts being hollow to provide communication between the housing (24) of each pole and the expansion volume of the enclosure (18), characterized in that the housing (24) of each arc extinguishing chamber (22) comprises a metal shielding wall (52) designed to counteract the influence of the magnetic stray fields of the adjacent poles liable to cause radial displacement of the arc in a direction perpendicular to the longitudinal axis of the housing (24), said wall (52) having a lateral revolution surface arranged in the vicinity of the arcing zone to ensure centering of the arc favouring outflow of the gas to the expansion volume of the enclosure (18) via said hollow contact (26, 28),
- an annular electrode constituting an arc rotation track in electrical connection with the stationary contact (26), and coaxially surrounded by the shielding wall (52),
- and means for magnetic blowout of the arc in rotation on said electrode.

2. The circuit breaker according to claim 1, characterized in that the shielding wall (52) is made of metallic material which is a good electrical conductor, arranged to be the seat of currents induced by the action of the currents flowing in the adjacent poles, said induced currents creating a magnetic compensation field which counteracts the magnetic stray field due to the influence of the neighbouring poles in the arcing area.

3. The circuit breaker according to claim 2, characterized in that the shielding wall (52) is made either of aluminium with a thickness greater than four millimeters, or of copper with a thickness greater than one millimeter.

4. The circuit breaker according to claim 1, characterized in that the shielding wall (52) is made of ferromagnetic material capable of channelling the force lines of the magnetic disturbance fields generated by the neighbouring poles.

5. The circuit breaker according to claim 4, characterized in that the shielding wall (52) comprises a pair of air-gaps (70, 72) diametrically opposed with respect to the alignment plane of the poles, and that said wall is located inside the housing (24) made of insulating material.

6. The circuit breaker according to claim 1, 2 or 3, each pole comprising a pair of connection terminals in electrical connection with the separable contacts, characterized in that the shielding wall (52) of each housing (24) is earthed, so as to constitute a guard ring for each pole inside the enclosure (18).

7. The circuit breaker according to claim 2 or 3, characterized in that the opposite ends of the conducting shielding wall (52) are shunted by a measurement sensor (62) of the nominal current flowing in the pole, said sensor being able to be a current transformer or a current relay.

8. The circuit breaker according to one of the claims 1 to 7, characterized in that the shielding walls (52) of the different poles (12 to 16) are interconnected inside the cubicle by means of electrical connections (60).

## Patentansprüche

1. Mehrphasen-Leistungsschalter mit mehreren parallel nebeneinander angeordneten Löschkammern (22) in einem dichtgekapselten mit einem Gas hoher dielektrischer Festigkeit, insbesondere Schwefelhexafluorid, gefüllten Polgehäuse (18), wobei die Löschkammer (22) jedes Pols aus folgenden Teilen besteht:
- einer geschlossenen Schaltkammer (24), in der es zu einem Druckanstieg des Gases durch die Wirkung des Lichtbogens kommt,
- zwei in der Längsachse der Schaltkammer (24) fluchtend angeordneten trennbaren Kontakten (26, 28), von denen mindestens einer als Hohlkontakt ausgeführt ist, um eine Verbindung zwischen der Schaltkammer (24) jedes Pols und dem Expansionsraum des Polgehäuses (18) zu ermöglichen, dadurch gekennzeichnet, daß die Schaltkammer (24) jeder Löschkammer (22) eine Metallabschirmung (52) zur Kompensation der durch angrenzende Pole verursachten magnetischen Streufelder besitzt, die eine radiale Verschiebung des Lichtbogens senkrecht zur Längsachse der Schaltkammer (24) bewirken könnten, wobei die genannte Abschirmung (52) eine umlaufende Mantelfläche besitzt, die in Höhe der Lichtbogenzone angeordnet ist, um eine Zentrierung des Lichtbogens zu gewährleisten und somit das Ausströmen des Gases durch die genannten Hohlkontakte (26, 28) in den Expansionsraum des Polgehäuses (18) zu begünstigen,
- einer die Rotationsbahn des Lichtbogens bildende Ringelektrode, die elektrisch mit dem feststehenden Kontakt (26) verbunden und koaxial von der Abschirmung (52) umgeben ist,
- und eine magnetische Blaseinrichtung, um den Lichtbogen auf der genannten Elektrode zur Rotation zu bringen.

2. Leistungsschalter nach Anspruch 1, dadurch gekennzeichnet, daß die Abschirmung (52) aus einem Metall mit hoher elektrischer Leitfähigkeit besteht und so angeordnet ist, daß sie von den Induktionsströmen durchflossen wird, die durch den Stromfluß in angrenzenden Polen erzeugt werden, wobei die induzierten Ströme ein Kompensationsmagnetfeld erzeugen, das in der Lichtbogenzone dem durch die angrenzenden Pole verursachten Störmagnetfeld entgegengerichtet ist.

3. Leistungsschalter nach Anspruch 2, dadurch gekennzeichnet, daß die Abschirmung (52) entweder aus Aluminium mit einer Stärke von mehr als vier Millimeter oder aus Kupfer mit einer Stärke von mehr als einem Millimeter besteht.

4. Leistungsschalter nach Anspruch 1, dadurch gekennzeichnet, daß die Abschirmung (52) aus einem ferromagnetischen Werkstoff besteht, der in der Lage ist, die Kraftlinien des durch die angrenzenden Pole verursachten magnetischen Störfeldes zu kanalisieren.

5. Leistungsschalter nach Anspruch 4, dadurch gekennzeichnet, daß die Abschirmung (52) mit zwei in bezug auf die Längsachse der Pole genau gegenüberliegenden Luftspalten versehen (70, 72) und die genannte Abschirmung im Innern der Isolierstoff-Schaltkammer (24) angeordnet ist.

6. Leistungsschalter nach Anspruch 1, 2 oder 3, bei dem jeder Pol über zwei mit den beweglichen Kontakten verbundene Anschlußklemmen verfügt, dadurch gekennzeichnet, daß die Abschirmung (52) jeder einzelnen Schaltkammer (24) an Erde liegt, und so für jeden Pol einen Schutzring im Innern des Gehäuses bildet.

7. Leistungsschalter nach Anspruch 2 oder 3, dadurch gekennzeichnet, daß die leitende Abschirmung (52) durch einen am oberen und am unteren Ende angeschlossenen Meßwandler (62) zur Erfassung des Pol-Nennstroms kurzgeschlossen wird, wobei dieser Meßwandler als Stromwandler oder Stromrelais ausgeführt sein kann.

8. Leistungsschalter nach einem der Ansprüche 1 bis 7, dadurch gekennzeichnet, daß die Abschirmungen (52) der einzelnen Pole (12 bis 16) über elektrische Verbindungen (60) miteinander verbunden sind.
